# EUROPÄISCHE PATENTANMELDUNG

(11) **EP 0 784 929 A1**
(43) Veröffentlichungstag der Anmeldung: **23.07.1997**
(21) Anmeldenummer: 96103383.4
(22) Anmeldetag: 05.03.1996
(51) Int. Cl.: A01K 45/00

(54) **Verfahren und Vorrichtung zum Fangen von Mastgeflügel in einem Stall**

(30) Priorität: 16.01.1996 DE 19601402
(71) Anmelder: HEIDEGOLD Geflügelspezialitäten GmbH & Co., 49847 Wielen, Grafschaft Bentheim (DE)
(72) Erfinder: Sloot, Ulrich, 48455 Bad Bentheim (DE); Töpker, Werner, 48455 Bad Bentheim (DE)
(74) Vertreter: Füchsle, Klaus, Dipl.-Ing.

(57) **Zusammenfassung**

Ein Fangsystem für in einem Stall gehaltenes Mastgeflügel weist ein Förderband (18) und mehrere in Richtung des Förderbandes (18) antreibbare Barrieren (12, 14, 16) auf. Die Barrieren werden mit langsamer Geschwindigkeit in Richtung des Förderbandes bewegt, wodurch das zu fangende Mastgeflügel sich auf das Förderband (18) bewegt und von dort in Richtung eines Transportbehältnisses bewegt wird.

## Beschreibung

Die vorliegende Erfindung betrifft ein Verfahren und eine Vorrichtung von Fangen von Mastgeflügel in einem Stall.

Bei der Geflügelaufzucht endet für den Geflügelmäster ein Mastdurchgang mit dem Fangen der Tiere, die sich in einem Stall befinden, wobei hierfür grundsätzlich zwei verschiedene Verfahren bekannt sind. Normalerweise erfolgt das Fangen manuell durch Fangkolonnen, die in der Regel aus 8 bis 12 Personen bestehen. Ein derartiges manuelles Fangen ist mit erheblichen Kosten verbunden (ca. 6 bis 7 Pfennig pro Tier), wobei die Tiere häufig verletzt oder getötet werden, was abgesehen von dem Leid des Tieres auch zu erheblichen Ertragsverlusten der Mäster und der Schlachtereien führt. Infolge von Fangschäden, wie Frakturen und Hämatomen, die beim herkömmlichen manuellen Fangen zwangsläufig auftreten, wird die Qualität des Endproduktes und damit auch der wirtschaftliche Ertrag erheblich beeinträchtigt. Schließlich ist das manuelle Fangen für die Tiere mit erheblichem Streß verbunden, was aus tierschutzrechtlichen Gründen bedenklich ist und auch unerwünschte Streßhormone freisetzt.

Ein weiteres Verfahren zum Fangen von Mastgeflügel in einem Stall ist das Fangen mit Fangmaschinen. Derartige Fangmaschinen sind fahrbar und weisen vertikale Rotationswalzen auf, an deren Außenumfang Gummifinger angeordnet sind, die miteinander kämmen. Ferner weisen derartige Fangmaschinen ein Saugrohr auf, das sich an die Fangwalzen anschließt und das die Tiere in Richtung eines Transportbehälters fördert. Zum Fangen der Tiere werden die Fangmaschinen durch den Stall gefahren, und die Tiere werden in Richtung der Maschine getrieben und schließlich von den rotierenden Gummifingern der Bürsten erfaßt. Nach dem Erfassen werden die Tiere durch das Saugrohr gefördert und gelangen zu dem Transportbehälter.

Durch diese bekannten Fangmaschinen, die lediglich zwei bis drei Bedienpersonen benötigen, um die Tiere vor die Fangwalzen zu treiben und um die Tiere vom Ausgang des Saugrohres in den Transportbehälter zu setzen, werden zwar die Lohnkosten reduziert, jedoch wird nicht das Problem der Verletzungen der Tiere gelöst. Auch sind derartige Fangmaschinen aufgrund ihres Gewichtes nicht in Ställen mit zwei Etagen und Holzböden einsetzbar und die Leistungen dieser Maschinen entsprechen nicht den Anforderungen der Schlachtereien, da lediglich eine Leistung von ca. 3000 Tieren pro Stunde erreicht wird, mit Fangkolonnen jedoch die etwa dreifache Kapazität möglich ist. Abgesehen davon, daß auch hier erhebliche Verletzungen auftreten, ist das Fangen mit Fangmaschinen auch mit erheblichem Streß verbunden, was tierschutzrechtlich problematisch ist und unerwünscht Streßhormone freisetzen kann.

Es ist deshalb das der vorliegenden Erfindung zugrundeliegende Problem (Aufgabe), ein Verfahren und eine Vorrichtung zum Fangen von Mastgeflügel zu schaffen, mit denen das Geflügel ohne Fangschäden und für die Tiere streßfrei gefangen werden kann, wobei gleichzeitig die Personalkosten gering gehalten werden.

Die Lösung dieser Aufgabe erfolgt durch ein Verfahren nach Patentanspruch 1 sowie durch ein Fangsystem nach Patentanspruch 11.

Nach dem erfindungsgemäßen Verfahren werden zum Fangen von Mastgeflügel in einem Stall zunächst eine angetriebene Barriere sowie ein zu einem Transportbehältnis führendes Förderband vorgesehen, wobei unter einer flächigen Barriere auch Gitter, Netze oder dergleichen verstanden werden. Die Barriere wird dann gleichmäßig in Richtung des Förderbandes bewegt und das Förderband wird in Richtung des Transportbehältnisses bewegt.

Durch die Erfindung wird bewirkt, daß die Tiere, die sich zwischen der Barriere und dem Förderband befinden, langsam und streßfrei auf das Förderband zubewegen und schließlich auf das Förderband aufsteigen. Da sich das Förderband in Richtung des Transportbehältnisses bewegt und da aufgrund der sich gleichmäßig bewegenden Barriere ständig Tiere in Richtung des Förderbandes bewegt werden, sind die Tiere auf dem Förderband gefangen und werden in Richtung des Transportbehältnisses gefördert. Dort können die Tiere entweder automatisch oder manuell in die Transportbehältnisse gepackt werden.

Das erfindungsgemäße Verfahren weist den großen Vorteil auf, daß ein streßfreies und somit artgerechtes Fangen der Tiere möglich ist, wobei gleichzeitig durch Vermeidung von Fangschäden die Mast- und Schlachtergebnisse verbessert werden können. Gleichzeitig werden die Fangkosten verglichen mit manuellem Fangen deutlich gesenkt, bezogen auf einen Stall mit den Maßen 12 m x 100 m und einer Besatzdichte von 30 kg/m² um einen Betrag von etwa 12.000 DM pro Jahr.

Vorteilhafte Ausführungsformen des erfindungsgemäßen Verfahrens sind durch die Unteransprüche 2 bis 10 gekennzeichnet.

So können nach einer vorteilhaften Ausführungsform des erfindungsgemäßen Verfahrens mehrere Barrieren, die vorzugsweise flächig ausgebildet sind, in einem gegenseitigen Abstand in Richtung des Förderbandes bewegt werden. Hierdurch wird erreicht, daß nicht zu viele Tiere von einer einzigen Barriere geleitet werden müssen, wodurch die Antriebselemente der Barriere keinen großen Kräften standhalten müssen.

Nach einer weiteren Ausführungsform der Erfindung können die Barrieren bei Erreichen des Förderbandes angehoben werden. Hierdurch ergibt sich der Vorteil, daß nicht abgewartet werden muß, bis sämtliche Tiere von dem Förderband abtransportiert worden sind, bis die Barriere über das Förderband hinweg bewegt werden kann, damit die nachfolgenden Tiere auf das Förderband gelangen können. Durch ein Anheben der Barriere vor dem Förderband läßt sich diese über die auf dem Förderband befindlichen Tiere hinweg weiterbewegen, so daß nachfolgende Tiere ebenfalls auf das Förderband gelangen können.

Eine besonders vorteilhafte Anordnung ergibt sich dadurch, daß die Barriere parallel zu dem Förderband angeordnet wird und sich vorzugsweise über die gesamte Stallbreite erstreckt. Bei beispielsweise runden Ställen ist jedoch auch das Schwenken der Barriere um eine Zentralachse in Richtung eines radial angeordneten Förderbandes möglich.

Sofern das Förderband zumindest teilweise, z.B. außerhalb des Stalles durch einen Käfig geführt wird, wird der Vorteil erreicht, daß die Tiere das Förderband nicht mehr verlassen können und sicher zu dem Transportbehältnis transportiert werden. Unter Käfig wird hierbei jede Vorrichtung verstanden, die verhindert, daß die Tiere das Förderband selbständig verlassen. Insbesondere kann ein beispielsweise transparenter Kunststoffkanal vorgesehen werden, um Verletzungen der Tiere zu vermeiden.

Nach einer weiteren vorteilhaften Ausführungsform wird das Förderband zumindest teilweise am Stallboden oder in den Stallboden eingelassen vorgesehen. Hierdurch ist das Besteigen des Förderbandes für die Tiere wesentlich erleichtert. Wenn aus baulichen Gründen das Förderband nicht in den Stallboden eingelassen werden kann, kann der Zugang auf das Förderband durch eine Rampe für die Tiere ebenfalls deutlich erleichtert werden. Zwischen der Aufstiegsstelle und dem Ende des Förderbandes kann dieses in vorteilhafter Weise auch ansteigen bzw. das Förderband kann im Bereich des Transportbehältnisses variabel ausgebildet sein, so daß mehrere übereinandergestapelte Container mit Tieren gefüllt werden können.

Nach einer weiteren vorteilhaften Ausführungsform der Erfindung kann das Förderband innerhalb des Stalls seitlich mit einer ortsfesten Barriere versehen werden, die auf der den angetriebenen Barrieren gegenüberliegenden Seite des Förderbandes vorgesehen wird. Hierdurch wird verhindert, daß die Tiere zwar auf das Förderband aufsteigen, dieses jedoch zur anderen Seite wieder verlassen. Eine derartige ortsfeste Barriere kann auch durch eine Stallwand gebildet werden.

Nach einer weiteren vorteilhaften Ausführungsform wird die Barriere mit einer Geschwindigkeit von etwa 0,1 bis 3 cm/sec, vorzugsweise mit etwa 1,25 cm/sec bewegt. Bezogen auf die Fortbewegungsgeschwindigkeit von Geflügel ist eine solche Geschwindigkeit als sehr langsam und daher auch streßfrei zu beurteilen, wobei bei einem Stall mit den eingangs genannten Maßen 12 m x 100 m und einer Besatzdichte von 30 kg/m² lediglich ca. drei Tiere pro Sekunde auf das Transportband steigen müssen, um eine Fanggeschwindigkeit von etwa 10.000 Tieren pro Stunde zu erreichen.

Die Lösung der eingangs genannten Aufgabe erfolgt auch durch ein Fangsystem gemäß Patentanspruch 11, das ein Förderband und zumindest eine in Richtung des Förderbandes antreibbare Barriere aufweist.

Vorteilhafte Ausführungsformen dieses Fangsystems sind durch die Unteransprüche 12 bis 22 gekennzeichnet.

Eine konstruktiv wenig aufwendige Ausführungsform einer anhebbaren Barriere wird dadurch erreicht, daß diese über einen Seilzug anhebbar ist, der an der Barriere selbst befestigt ist. Hierbei kann das Anheben durch Inbetriebsetzen eines Motors erfolgen, der sich an der Barriere befindet und der durch einen Sensor oder eine Steuerung unmittelbar vor Erreichen des Förderbandes in Betrieb gesetzt wird. Durch Weiterbewegen der Barriere in Richtung des Förderbandes gelangt die Barriere über die auf dem Förderband befindlichen Tiere hinweg zu einem Pufferraum für Barrieren.

Ferner kann die Barriere in vorteilhafter Weise als Leichtbauelement ausgebildet sein, vorzugsweise als Rahmenkonstruktion, die mit Kunststoffolie bespannt ist. Hierbei kann das Rahmenelement aus Holz oder Aluminium bestehen und die Kunststoffolie kann auch aufrollbar an zwei vertikalen Rohren befestigt werden. Durch Drehen des oberen Rohres läßt sich dabei die Barriere aufwickeln und muß dann nicht speziell angehoben werden.

Nach einer weiteren Ausführungsform der Erfindung kann die Barriere von einer Transportbahn geführt und vorzugsweise an Seilen aufgehängt sein. Eine derartige Lösung ist kostengünstig und konstruktiv einfach, wobei jedoch auf der Transportbahn auch Laufkatzen mit vertikalen Halteträgern geführt werden können. Die Transportbahn kann auf oder in dem Stallboden angeordnet sein oder sich statt dessen an den Stallwänden oder unter der Stalldecke befinden, was den zusätzlichen Vorteil hat, daß die Transportbahn vor dem Fangvorgang nicht freigelegt werden muß.

Für den Antrieb der Barriere kann in vorteilhafter Weise ein mit Mitnehmern versehener Endlosantrieb vorgesehen sein, der vorzugsweise in der Richtung umkehrbar ist. Hierdurch lassen sich die Barrieren zunächst zum Fangen der Tiere in Richtung des Förderbandes bewegen und in einem Pufferraum zwischenspeichern. Nach Beenden des Fangvorganges kann dann der Endlosantrieb in der Richtung umgedreht werden und die Barrieren können mit Hilfe der Mitnehmer zurückgefördert werden. Hierbei kann in besonders vorteilhafter Weise am anderen Stallende ebenfalls ein Förderband vorgesehen werden, so daß beim Zurückfördern der Barrieren bereits die Nachfolgetiere gefangen werden können.

Als Transportbahn eignet sich neben einem T-förmigen Profil auch ein Rundrohr oder dergleichen.

Nachfolgend wird die vorliegende Erfindung rein beispielhaft anhand vorteilhafter Ausführungsformen beschrieben. Es zeigen:
- Fig. 1: eine perspektivische, teilweise weggebrochene Darstellung eines erfindungsgemäßen Fangsystems; und
- Fig. 2: eine Seitenansicht einer bewegbaren und anhebbaren Barriere.

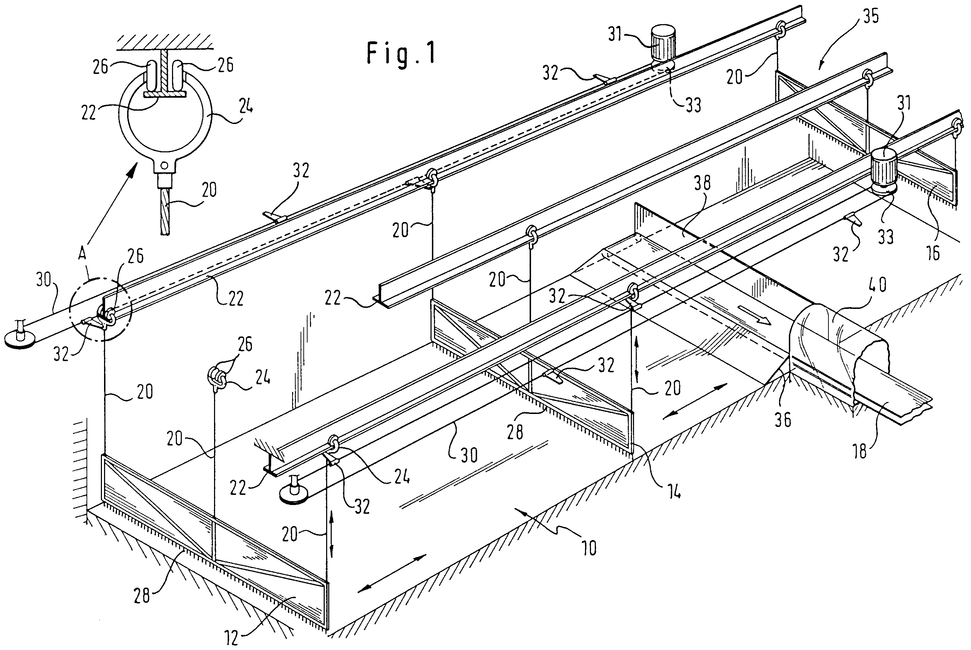

Das in Fig. 1 dargestellte Fangsystem für in einem Stall gehaltenes Mastgeflügel weist mehrere in Richtung eines Förderbandes 18 antreibbare Barrieren 12, 14 und 16 auf. Die Barrieren sind dabei flächig ausgebildet und erstrecken sich über die gesamte Stallbreite von einer Stallwand zur gegenüberliegenden Stallwand. Jede Barriere ist als Leichtbauelement mit einem Aluminiumrahmen ausgebildet, der mit einer Kunststoffolie umspannt ist. Die Höhe des Rahmens beträgt ca. 100 cm, was für Mastgeflügel ausreichend ist. Jede Barriere 12, 14 und 16 ist jeweils an drei Seilen 20 aufgehängt, die auf parallelen Transportbahnen 22 geführt werden, welche parallel zur Längserstreckung des Stalles verlaufen und an der Stalldecke befestigt sind. Das Detail A in Fig. 1 zeigt, daß jedes Seil 20 an einem etwa kreisförmigen Gleitelement 24 befestigt ist, das zwei Laufrollen 26 aufweist, die auf der Transportbahn 22 gleiten, die als T-förmige Schiene ausgebildet ist und unter der Stalldecke befestigt ist. An der Unterseite jeder Barriere befindet sich ein bürstenartiges Element 28 als Abschlußelement zum Stallboden. Dieses Bürstenelement dient dazu, ein Einklemmen der Tiere zu verhindern und Unebenheiten im Stallboden (z.B. durch Stroh und dgl.) zu egalisieren bzw. zu kompensieren.

Der Antrieb der Barrieren erfolgt über einen Endlosantrieb 30, der in Längsrichtung in Bereich der äußeren Wände des Stalles montiert ist. Der Endlosantrieb 30 mit einem Seil oder einer Kette weist mehrere Mitnehmer 32 auf, welche in die herabhängenden Seile 20 der Barrieren eingreifen und somit diese in Pfeilrichtung antreiben.

Am Ende des Stalles ist ein Motor 31 des Endlosantriebs 30 vorgesehen, der auf ein Umlenkrad 33 wirkt. Am anderen Ende des Endlosantriebs ist ein nicht angetriebenes Umlenkrad vorgesehen. Der Endlosantrieb 30 ist auf beiden Längsseiten des Stalles vorgesehen, wobei die Motoren 31 beider Endlosantriebe 30 synchron laufen.

Wie in Fig. 1 ferner zu erkennen ist, ist am Stallende bzw. Stallanfang ein Pufferraum 35 vorgesehen, in dem nicht mehr benötigte Barrieren (hier die Barriere 16) zwischengelagert werden können. Der Pufferraum 35 kann jedoch auch oberhalb des nachfolgend beschriebenen Förderbandes vorgesehen werden.

Fig. 1 zeigt das in der Nähe eines Stallendes vorgesehene und flachgebaute Förderband 18, das eine Höhe von maximal ca. 10 cm aufweist. Zur Stallmitte hin befindet sich eine mit Gummi beschichtete Rampe 36, die den Tieren ein Aufsteigen auf das Förderband erleichtert. Auf der Seite des Pufferraums 35, ist an der Seite des Förderbands ein senkrechtes Blech 38 montiert, welches verhindert, daß die Tiere das Band ungewollt wieder verlassen.

Das Förderband 18 ist außerhalb der Aufstiegsstelle für die Tiere von einem Käfig 40 aus transparentem Kunststoff umgeben, der ebenfalls ein ungewolltes Entfernen der Tiere von dem Förderband verhindert.

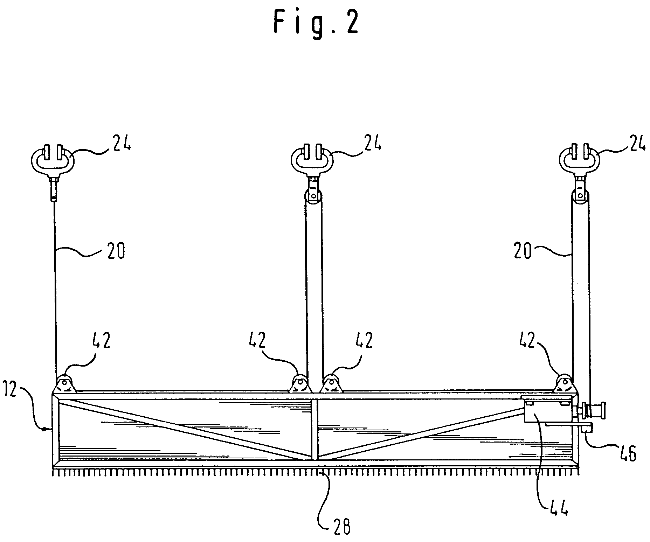

In Fig. 2 ist die Hubvorrichtung einer Barriere (beispielsweise der Barriere 12) dargestellt, die auch bei den in Fig. 1 gezeigten Barrieren vorhanden, jedoch dort nicht dargestellt ist. Die in Fig. 2 gezeigte rechteckige und flächige Barriere 12 besteht aus einer Rahmenkonstruktion, die mit Kunststoffolie bespannt ist, und weist an ihrer Oberseite insgesamt vier Umlenkrollen 42 auf. Das Seil 20 ist dabei an dem ganz linken Gleitelement 24 befestigt und über die beiden linken Umlenkrollen 42, über eine an dem mittleren Gleitelement 24 befestigte Umlenkrolle, weiter über die beiden rechts liegenden Umlenkrolle 42 zu einer letzten Umlenkrolle geführt, die an dem ganz rechten Gleitelement 24 befestigt ist. Von dort ist das Seil zu einer Motorwinde 44 geführt, die an der Barriere befestigt ist. Durch die dargestellte Konstruktion kann die Barriere 12 durch Betätigen der Seilwinde 44 angehoben werden, wobei das Betätigen der Seilwinde 44 durch einen Sensor 46 gesteuert wird, der das Erreichen des Förderbandes detektiert.

Nachfolgend wird unter Bezugnahme auf Fig. 1 das erfindungsgemäße Verfahren beschrieben.

Wenn das in dem Stall 10 befindliche Mastgeflügel gefangen werden soll, befinden sich zunächst noch sämtliche Barrieren 12, 14, 16 angehoben an demjenigen Stallende, das dem Förderband 18 gegenüberliegt. Nun wird der Motor 31 des Endlosantriebs 30 in Bewegung gesetzt, und die äußeren Seile 20 der Barrieren werden nacheinander und entsprechend beabstandet in die Mitnehmer 32 eingehängt. Dies kann manuell oder automatisch erfolgen. Hierdurch werden sämtliche Barrieren nacheinander und beabstandet nach rechts bewegt, befinden sich jedoch noch oberhalb der zu fangenden Tiere.

Wenn die Barrieren gleichmäßig über die Stallänge verteilt sind, wird der Motor 31 des Endlosantriebs 30 angehalten und die Barrieren werden vorsichtig abgesenkt (Fig. 1). Nun werden das Förderband 18 und der Endlosantrieb 30 in Betrieb gesetzt und die Barrieren bewegen sich langsam auf das Förderband zu. Die Mitnahme erfolgt dabei über die Mitnehmer 32, die jeweils in die äußeren Seile 20 eingreifen. Die Barrieren werden mit einer Geschwindigkeit von ca. 1,25 cm/sec weiterbewegt, was die Tiere in Richtung des Förderbandes 18 treibt. Dort angekommen, steigen die Tiere über die Rampe 36 gezwungenermaßen auf das Förderband und werden aus dem Stall hinaus durch den Käfig 40 zur Verladung abtransportiert. Ein am Ende des Förderbandes installiertes opto-elektronisches Zählwerk ermöglicht hierbei das exakte Erfassen der Stückzahl. Am Ende des Förderbandes müssen die Tiere lediglich vorsichtig vom Förderband in das jeweilige Transportbehältnis geführt werden.

Wenn eine Barriere das Förderband 18 erreicht, wird dies durch den Sensor 46 (Fig. 2) detektiert, der die Motorwinde 44 in Betrieb setzt, wodurch die Barriere angehoben wird und dabei weiter über das Förderband 18 hinweg bewegt werden kann. Die Barriere (in Fig. 1 die Barriere 16) befindet sich dann in dem Pufferraum 35 und außerhalb der Mitnehmer des Endlosantriebs 30. Nachdem sämtliche Barrieren durch den Stall bewegt worden sind, ist der Stall leer und kann gereinigt und wieder befüllt werden.

Sofern im Stall Lüftungsschächte, Säulen, Stützen oder dergleichen vorhanden sind, kann die Barriere durch ein hand- oder federbetätigtes Klappelement geteilt werden, das nach Art einer Pforte sich automatisch öffnet, wenn die entsprechende Säule überfahren wird, und das sich anschließend wieder schließt.

Neben der in Fig. 1 dargestellten Anordnung kann das Förderband 18 auch in der Stallmitte vorgesehen werden, wobei Barrieren von beiden Enden des Stalles in Richtung des Förderbandes bewegt werden. Auch ist es möglich, an beiden Enden des Stalles Förderbänder vorzusehen und die Barrieren entweder von der Stallmitte aus zu beiden Seiten in Richtung der Förderbänder zu bewegen oder die Barrieren nach jeder Stalleerung in umgekehrter Richtung auf das jeweils andere Förderband zuzubewegen.

## Patentansprüche

1. Verfahren zum Fangen von Mastgeflügel in einem Stall, umfassend die folgenden Schritte:
a) Vorsehen zumindest einer angetriebenen, anheb- und absenkbaren Barriere in dem Stall;
b) Vorsehen eines zu einem Transportbehältnis führenden Förderbandes;
c) gleichmäßiges Bewegen der Barriere in Richtung des Förderbandes;
d) Anheben der Barriere im Bereich des Förderbandes; und
e) Bewegen des Förderbandes in Richtung des Transportbehältnisses.

2. Verfahren nach Anspruch 1, dadurch gekennzeichnet, daß mehrere, vorzugsweise flächige Barrieren in einem gegenseitigen Abstand in Richtung des Förderbandes bewegt werden.

3. Verfahren nach Anspruch 1 oder 2, dadurch gekennzeichnet, daß die Barriere durch eine flächige, auf- und abwickelbare Einrichtung gebildet wird oder eine solche aufweist, wobei im Bereich des Förderbandes die Barriere angehoben und/oder die auf- und abwickelbare Einrichtung aufgewickelt wird.

4. Verfahren nach zumindest einem der vorstehenden Ansprüche, dadurch gekennzeichnet, daß die Barriere parallel zu dem Förderband angeordnet wird.

5. Verfahren nach zumindest einem der vorstehenden Ansprüche, dadurch gekennzeichnet, daß das Förderband zumindest teilweise durch einen Käfig geführt wird.

6. Verfahren nach zumindest einem der vorstehenden Ansprüche, dadurch gekennzeichnet, daß die Barriere über die gesamte Stallbreite in Richtung des Förderbandes bewegt wird.

7. Verfahren nach zumindest einem der vorstehenden Ansprüche, dadurch gekennzeichnet, daß das Förderband zumindest teilweise am Stallboden oder vorzugsweise in den Stallboden eingelassen vorgesehen wird.

8. Verfahren nach zumindest einem der vorstehenden Ansprüche, dadurch gekennzeichnet, daß das Förderband innerhalb des Stalls seitlich mit einer ortsfesten Barriere versehen wird.

9. Verfahren nach zumindest einem der vorstehenden Ansprüche, dadurch gekennzeichnet, daß die Barriere mit einer Geschwindigkeit von etwa 0,1 bis 3 cm/sec, vorzugsweise mit etwa 1,25 cm/sec, bewegt wird.

10. Verfahren nach zumindest einem der vorstehenden Ansprüche, dadurch gekennzeichnet, daß zu Beginn des Fangens mehrere Barrieren zunächst beabstandet oberhalb der zu fangenden Tiere angeordnet und anschließend in Richtung des Stallbodens abgesenkt werden.

11. Fangsystem für in einem Stall gehaltenes Mastgeflügel, insbesondere zur Durchführung des Verfahrens nach zumindest einem der vorstehenden Ansprüche, mit
- einem Förderband (18); und
- zumindest einer in Richtung des Förderbandes (18) antreibbaren Barriere (12, 14, 16),
dadurch gekennzeichnet, daß
die Barriere (12, 14, 16) an wahlweisen Stellen entlang Ihres Verfahrweges absenk- und anhebbar ist.

12. Fangsystem nach Anspruch 11, dadurch gekennzeichnet, daß mehrere, vorzugsweise flächige Barrieren (12, 14, 16) vorgesehen sind, die in einem gegenseitigen Abstand in Richtung des Förderbandes (18) bewegbar sind.

13. Fangsystem nach Anspruch 11 oder 12, dadurch gekennzeichnet, daß die Barriere (12, 14, 16), vorzugsweise über einen an dieser befestigten Seilzug, anhebbar ist.

14. Fangsystem nach zumindest einem der vorstehenden Ansprüche 11 bis 13, dadurch gekennzeichnet, daß die Barriere (12, 14, 16) parallel zu dem Förderband (18) angeordnet ist.

15. Fangsystem nach zumindest einem der vorstehenden Ansprüche 11 bis 14, dadurch gekennzeichnet, daß das Förderband (18) zumindest teilweise von einem Käfig (40) umgeben ist.

16. Fangsystem nach zumindest einem der vorstehenden Ansprüche 11 bis 15, dadurch gekennzeichnet, daß die Barriere (12, 14, 16) sich über die gesamte Stallbreite erstreckt.

17. Fangsystem nach zumindest einem der vorstehenden Ansprüche 11 bis 16, dadurch gekennzeichnet, daß das Förderband (18) zumindest teilweise am Stallboden oder vorzugsweise in den Stallboden eingelassen vorgesehen ist.

18. Fangsystem nach zumindest einem der vorstehenden Ansprüche 11 bis 17, dadurch gekennzeichnet, daß das Förderband (18) innerhalb des Stalls seitlich eine ortsfeste Barriere (38) aufweist.

19. Fangsystem nach zumindest einem der vorstehenden Ansprüche 11 bis 18, dadurch gekennzeichnet, daß die Barriere (12, 14, 16) als Leichtbauelement ausgebildet ist, vorzugsweise als mit Kunststoffolie bespannte Rahmenkonstruktion.

20. Fangsystem nach zumindest einem der vorstehenden Ansprüche 11 bis 19, dadurch gekennzeichnet, daß die Barriere von einer Transportbahn (20) geführt und vorzugsweise an einem Seil (20) aufgehängt ist.

21. Fangsystem nach zumindest einem der vorstehenden Ansprüche 11 bis 20, dadurch gekennzeichnet, daß für den Antrieb der Barriere ein mit Mitnehmern (32) versehener Endlosantrieb (30) vorgesehen ist.

22. Fangsystem nach zumindest einem der vorstehenden Ansprüche 11 bis 21, dadurch gekennzeichnet, daß für den Zugang auf das Förderband (18) eine Rampe (36) vorgesehen ist.

23. Fangsystem nach zumindest einem der vorstehenden Ansprüche 11 bis 22, dadurch gekennzeichnet, daß die Barriere (12, 14, 16) durch eine flächige, auf- und abwickelbare Einrichtung gebildet wird oder eine solche aufweist.
